(19) Europäisches Patentamt
European Patent Office
Office européen des brevets

(11) Publication number: 0 302 297 B1

(12) **EUROPEAN PATENT SPECIFICATION**

(45) Date of publication of patent specification: **13.11.91**

(51) Int. Cl.5: **C08F 210/08**, C08F 4/64

(21) Application number: **88111600.8**

(22) Date of filing: **19.07.88**

(54) **Butene-1 copolymer.**

(30) Priority: **20.07.87 JP 180383/87**
**20.07.87 JP 180384/87**

(43) Date of publication of application:
**08.02.89 Bulletin 89/06**

(45) Publication of the grant of the patent:
**13.11.91 Bulletin 91/46**

(84) Designated Contracting States:
**BE CH DE FR GB IT LI NL SE**

(56) References cited:
**EP-A- 0 184 903**
**EP-A- 0 206 172**
**US-A- 3 489 732**

(73) Proprietor: **IDEMITSU PETROCHEMICAL CO. LTD.**
**1-1, Marunouchi 3-chome Chiyoda-ku**
**Tokyo 100(JP)**

Proprietor: **NESTE OY**
**Keilaniemi**
**SF-02150 Espoo(FI)**

(72) Inventor: **Yamawaki, Takashi**
**Idemitsu Petrochemical Co. Ltd**
**1-1,Anagasakikaigan**
**Ichihara-shi Chiba-ken(JP)**

(74) Representative: **TER MEER - MÜLLER - STEINMEISTER & PARTNER**
**Mauerkircherstrasse 45**
**W-8000 München 80(DE)**

**EP 0 302 297 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

Field of the Invention

The present invention relates to a butene-1 copolymer, more particularly to a butene-1 copolymer which has excellent mechanical properties such as a high tensile strength, high impact strength and etc., good working characteristics, small shrinkage after molding, moderate flexibility, and good low-temperature impact properties such as retention of a high impact strength at a low temperature. The butene-1 copolymer of the present invention can be used as various materials for, for example, films, wire sheaths or pipes.

Description of Related Art

There have hitherto been known butene-1 copolymers such as a bipolymer comprising butene-1 unit and an $\alpha$-olefin unit having five or more carbon atoms (see Japanese Patent Kokai = Laid-Open = No. 61-108164), a butene-1-propylene copolymer (see Japanese Patent Kokai = Laid-Open = No. 60-38414) and a butene-1-ethylene copolymer (see Japanese Patent Kokai = Laid-Open = No. 61-108615).

Generally, it is known that the butene-1 copolymer exhibits two different crystalline states called type-I crystal and type-II crystal.

However, the copolymer disclosed in Japanese Patent Kokai No. 61-108164 has a characteristic that it is stable in a state of type-II crystal and hardly transformed in type-II crystal, but it has such a drawback that it has no satisfactory low-temperature impact properties.

Furthermore, the copolymer disclosed in Japanese Patent Kokai No. 60-38414 is rapidly transformed from type-II crystal to type-I crystal and a molded product of this copolymer has a small shrinkage after molding, but this copolymer has poorer low-temperature impact properties than those of a homopolymer and, therefore, this copolymer has a drawback that it is not suitable as industrial material.

On the other hand, the copolymer disclosed in Japanese Patent Kokai No. 108165 has improved low-temperature impact properties, but it is inconveniently gradually transformed from type-II crystal to type-I crystal, which causes a shaped article of this copolymer to be shrinked.

Furthermore, Japanese Patent Kokai = Laid-Open = No. 56-20006 discloses a butene-1-propylene-ethylene terpolymer.

However, this terpolymer is an amorphous polymer for a sealant and has an ether solubility of about 86 %.

SUMMARY OF THE INVENTION

The object of the present invention is to provide a butene-1 copolymer, more particularly to a butene-1 copolymer which has excellent mechanical properties such as a high tensile strength, high impact strength and etc., good working characteristics, small shrinkage after molding, moderate flexibility, and good low-temperature impact properties such as retention of a high impact strength at a low temperature.

In accordance with the present invention, in order to achieve the above-mentioned object, there is provided a butene-1 copolymer characterized by comprising 60 to 98.5 mol % of butene-1 unit, 0.5 to 20 mol % of ethylene unit and 0.5 to 20 mol % of another $\alpha$-olefin units, said butene-1 copolymer having an intrinsic viscosity of 0.9 to 7.2 dl/g measured in a decalin solution heated to 135 °C, a density of 0.840 to 0.920 g/cm$^3$, a weight-average molecular weight/number-average molecular weight ratio of 2 to 15, a maximum melting point of 50 to 120 °C measured by a differential scanning calorimeter, a soluble matter content of said butene-1 copolymer in boiling diethyl ether of 3 to 50 wt % and a crystallinity of 5 to 60 % measured by X-ray diffractometry, and containing one or less neighboring bond of the ethylene unit and the ather $\alpha$-olefin units per 1,000 carbon atoms mesured by NMR.

DESCRIPTION OF THE PREFERRED EMBODIMENTS

The butene-1 copolymer of the present invention contains three kinds of olefin units, i.e., butene-1 unit (a), ethylene unit (b) and $\alpha$-olefin unit(s) other than ethylene and butene-1 (c).

$\alpha$-Olefins affording the other $\alpha$-olefin unit may include, for example, a straight-chain $\alpha$-monoolefin such as propylene, pentene-1, hexene-1, heptene-1, octene-1, nonene-1, decene-1 or dodecene-1; a branched $\alpha$-

monoolefin such as 4-methylpentene-1, neohexene or isooctene; an alicyclic α-monoolefin such as vinylcyclohexane or vinylcyclohexene; aromatic α-monoolefins such as styrene; and an α-diene such as pentadiene or 5-hexadiene.

Among these α-olefins, aliphatic α-monoolefins containing 3 and 5 to 12 carbon atoms, such as propylene, pentene-1, hexene-1, octene-1, decene-1 and 4-methylpentene are preferred, particularly propylene, hexene-1, octene-1 and 4-methylpentene-1 are preferred.

These α-olefins as the monomer unit of the butene-1 copolymer may be used singly or in combination thereof.

The butene-1 copolymer of the present invention is normally comprised of 60 to 98.5 mol % of the butene-1 unit (a), 0.5 to 20 mol % of the ethylene unit (b) and 0.5 to 20 mol % of the other α-olefin unit(s) (c) whin the totol of the units (a), (b) and (c) is 100 mol %.

The molar percentages of the units (a), (b) and (c) vary depending upon the kinds of the respective α-olefins used.

For example, in the case that the butene-1 copolymer is comprised of butene-1 unit (a), ethylene unit (b) and propylene unit (c), the unit (a) is in the range of 70 to 97.5 mol %, preferably 73 to 96.8 mol %, the unit (b) in the range of 2 to 20 mol %, preferably 2.5 to 15 mol %, and the unit (c) in the range of 0.5 to 15 mole %, preferably 0.7 to 12 mol %, based on 100 mol % of the total of the units (a), (b) and (c).

If the content of the propylene unit (c) in the butene-1 copolymer is less than 0.5 mol %, then the copolymer is not rapidly transformed from the type-II crystal to the type-I crystal and, therefore, a shaped article of the copolymer is often deformed. If the content exceeds 15 mol %, on the other hand, there is obtained no improvement in low-temperature impact properties.

If the content of the ethylene unit (b) in the butene-1 copolymer is less than 2 mol %, any satisfactory low-temperature impact properties are not obtained. If the content exceeds 20 mol %, on the other hand, a shaped article of the copolymer feels sticky on the surface thereof and hence the surface becomes easily dirty, thus commercial value of the article is lowered.

In the case of the butene-1 copolymer comprising the butene-1 unit (a), the ethylene unit (b) and the α-olefin unit (c) having 5 or more carbon atoms, which is at least one of the units (c) as exemplified above, the butene-1 copolymer contains 60 to 98.5 mol %, preferably 70 to 97.3 mol % of the butene-1 unit (a), 0.5 to 20 mol %, preferably 0.7 to 15 mol % of the ethylene unit (b) and 1 to 20 mol %, preferably 2 to 15 mol % of the α-olefin unit (c), when the total of the units (a), (b) and (c) is 100 mol %. In the case, however, that the copolymer contains at least two of the α-olefin units (c) having 5 or more carbon atoms, the content of the units (c) is a total of all the units (c) contained.

If the content of the α-olefin unit (c) in the butene-1 copolymer is less than 1 mol %, the transformation from type-II crystal to type-I crystal occurs, so that a shrinkage with time of a shaped article of the copolymer is insufficiently prevented and hence the shaped article may often be deformed. If the content of the unit (c) exceeds 20 mol %, on the other hand, there may be produced such disadvantages that the butene-1 copolymer becomes heterogeneous and the shaped article becomes so sticky that the surface of the shaped article is easily dirty. Thus, the article is commercially unvalued.

If the content of the ethylene unit (b) is less than 0.5 mol %, the low-temperature impact properties are not satisfactory. If the content of the unit (b) exceeds 20 mol %, on the other hand, there may be produced such disadvantages that the butene-1 copolymer becomes heterogeneous and the shaped article becomes so sticky that the surface of the shaped article is easily dirty. Thus, the article is commercially unvalued.

The intrinsic viscosity [$\eta$] of the butene-1 copolymer of the present invention measured in a decalin solution at 135 °C is in the range of 0.9 to 7.2 dl/g, preferably 1.0 to 5.0 dl/g. This intrinsic viscosity [$\eta$] has an effect principally on the moldability and mechanical strength of the butene-1 copolymer.

If the intrinsic viscosity [$\eta$] is less than 0.9 dl/g, an article molded of the butene-1 copolymer has a reduced mechanical strength, particularly low impact strength. If the intrinsic viscosity is higher than 7.2 dl/g, then the moldability is reduced.

The density of the butene-1 copolymer according to the present invention is in the range of 0.840 to 0.920 g/cm$^3$.

If the density is less than 0.840 g/cm$^3$, the crystallinity of the copolymer is conspicuously reduced, so that the mechanical properties thereof become poorer. If the density exceeds 0.920 g/cm$^3$, then there is less improvement in low-temperature properties and crystal transformation.

The preferred range of density delicately varies depending upon the kind of the α-olefin unit. For example, it is preferably 0.86 to 0.91 g/cm$^3$ for the butene-1 copolymer having butene-1 unit (a), ethylene unit (b) and propylene unit (c). On the other hand, it is preferably 0.85 to 0.91 g/cm$^3$ for the butene-1 copolymer having butene-1 unit (a), ethylene unit (b) and an α-olefin (c) having 5 or more carbon atoms.

The molecular weight distribution of the butene-1 copolymer according to the present invention, i.e., the

weight-average molecular weight (Mw)/number-average molecular weight (Mn) ratio of the butene-1 copolymer is in the range of 2 to 15. The molecular weight distribution has an effect on the transparency, moldability and mechanical properties of the butene-1 copolymer. Butene-1 copolymers produced by prior art methods have a tendency to have a narrow width of molecular weight distribution, are hardly molded in an article with satisfactory moldability, and often formed in a film having unsatisfactory transparency.

If the butene-1 copolymer has a molecular weight distribution (Mw/Mn) of less than 2, the fluidability thereof is lowered so that the moldability thereof is unsatisfactory, and further the appearance of the molded article may be improper, and the film has unsatisfactory transparency. If the molecular weight distribution (Mw/Mn) exceeds 15, then mechanical properties such as an impact strength are reduced.

Particularly, the molecular weight distribution (Mw/Mn) of the butene-1 copolymer comprising butene-1 unit (a), ethylene unit (b) and propylene unit (c) is preferably in the range of 3 to 12. The copolymers having a molecular weight distribution within this range have particularly good mechanical properties as well as good moldability and good transparency. Further, the molecular weight distribution (Mw/Mn) of the butene-1 copolymers comprising butene-1 unit (a), ethylene unit (b) and $\alpha$-olefin unit (c) having 5 to more carbon atoms is also preferably in the range of 3 to 12 for the same reasons as mentioned above.

The maximum melting point of the butene-1 copolymer according to the present invention measured by a differential scanning calorimeter is within the range of 50 to 120 °C. In the present invention, this maximum melting point is determined by a differential scanning calorimeter and it means the highest temperature among temperatures at which the dried butene-1 copolymer exhibits endothermic peaks when heated at a heating rate of 10 °C/min. from 0 to 200 °C.

If this maximum melting point is lower than 50 °C, heat resistance is reduced and the stickiness of the butene-1 copolymer may be generated at normal temperatures and hence not usable as a raw material for molded articles.

A preferred range of the maximum melting point varies depending upon the kind of the olefin unit. For example, it is 60 to 110 °C for the butene-1 copolymer comprising butene-1 unit (a), ethylene unit (b) and propylene unit (c) and 70 to 110 °C for the butene-1 copolymer comprising butene-1 unit (a), ethylene unit (b) and $\alpha$-olefin unit (c) having 5 or more carbon atoms.

The butene-1 copolymer of the present invention is required to have a content of soluble matter in boiling diethyl ether in the range of 3 to 50 % by weight.

Generally, the content of soluble matter in boiling diethyl ether has a tendency to decrease as the degree of polymerization of the butene-1 copolymer increases, and a tendency to decrease as the crystallinity of the butene-1 copolymer increases. The selection of the above-mentioned preferred range of the content of soluble matter in boiling diethyl ether means that polymers having a low degree of polymerization or low crystallinity are eliminated from the butene-1 copolymer of the present invention.

Thus, the content of soluble matter in boiling diethyl ether of less than 3 % by weight causes a film article having a lower tansparency to be formed. The content of soluble matter of greater than 50 % by weight permits the content of polymers having a low degree of polymerization to increase, which renders an article sticky on the surface thereof.

However, a preferred range of the content of soluble matter in boiling diethyl ether varies depending upon the kind of the olefin unit. For example, it is 5 to 40 % by weight for the butene-1 copolymer comprising butene-1 unit (a), ethylene unit (b) and propylene unit (c).

The butene-1 copolymer of the present invention has a crystallinity of 5 to 60 % when measured by an X-ray diffractometry. The crystallinity of less than 5 % renders an article sticky on the surface thereof. On the other hand, the crystallinity of greater than 60 % causes an article to be easily embrittled and low in impact strength at a low temperature.

The cristallinity varies depending upon the kind of the olefin unit. For example, it is preferably in the range of 10 to 50 % for the butene-1 copolymer comprising butene-1 unit (a), ethylene unit (b) and propylene unit (c).

The crystallinity is measured with a pressed sheet of the butene-1 copolymer of 1 mm thick in 48 hours after pressing.

The butene-1 copolymer of the present invention has the number of neighboring bonds of ethylene unit and the other $\alpha$-olefine units contained therein in the range of 1 or less, preferably 0.7 or less per 1,000 carbon atoms, when measured by NMR ($^{13}$C-NMR) at 400 MHz. If the number of the neighboring bonds per 1,000 carbon atoms exceeds 1, then the crystallinity is lowered and, therefore, the tensile break strength is also conspicuously lowered. Thus, an article made from a copolymer having such number of the neighboring bonds is not industrially suitable.

The butene-1 copolymer of the present invention can easily be prepared by, for example, reacting ethylene, propylene and butne-1 in a gaseous phase in the presence of a catalyst comprising a specified

magnesium-containing solid catalytic component, organoaluminum compound and a specified electron-donating compoud, the magnesium-containing solid catalytic component represented by the general formula of

$MgR^1R^2$

wherein $R^1$ and $R^2$ each is an alkyl group.

Concretely speaking, the processes described in Japanese Patent Application Nos. 61-144093, 61-196265, 61-196266 and 61-196722 can be used. The process conditions may be experimentally chosen depending upon the properties of the butene-1 copolymer to be desired in the present invention.

Preparation of the butene-1 copolymer of the present invention will be explained below along the line described in Japanese Patent KOKAI = Laid-Open = No. 61-196266. However, the process for preparing the butene-1 coplymer according to the present invention should not be limited by this explanation.

The butene-1 copolymer of the present invention can easily be prepared by reacting butene-1, ethylene and the other ∝-olefin in gaseous phase in the presence of such a catalyst comprising a solid catalytic component (A), organoaluminum compound (B) and electron-donating compound (C) as mentioned below.

The solid catalytic component (A) is prepared by chlorinating at least one of organomagnesium compounds represented by the formula of

$MgR^1R^2$

wherein $R^1$ and $R^2$, which may be identical with or different from each other, each is an alkyl group having 1 to 20 carbon atoms, with at least one chlorinating agent to obtain a carrier and bringing this carrier into contact with a halide of tetravalent titanium in the presence of an electron donor at a temperature ranging from -25 to +180 °C.

As the organomagnesium compound reference may be made to an alkyl magnesium compound such as diethyl magnesium, ethylbutyl magnesium, ethylhexyl magnesium, ethyloctyl magnesium, dibutyl magnesium, butylhexyl magnesium, butyloctyl magnesium and dicyclohexyl magnesium.

As the chlorinating agent reference may be made to clorine gas and an alkyl chloride. In the present invention, a combination of chlorine gas and butyl chloride is preferably used.

Chlorination is normally carried out at a temperatur of 0 to 100 °C, preferably 10 to 60 °C, more preferably 20 to 40 °C.

By this chlorination, chlorine atoms are substituted for part of the alkyl groups bonded to magnesium atoms. Further,there remains at least part of the alkyl groups. Therefore, the normal formation of crystal lattice is prevented by the action of the remaining alkyl groups to produce non-layer crystals having a very small size and proper surface area and pore volume.

The thus obtained non-layer crystals, in short, is treated with an alcohol and thereafter with a halde of tetravalent titanium in the presence of an electron donor. The treatment with the halide of tetravalent titanium is normally carried out at a temperature ranging from -25 to +180 °C.

As the halide of tetravalent titanium reference may be made to a titanium tetrahalide, alkoxytitanium trihalide, alkoxytitanium dihalide and trialkoxytitanium monohalide. Particularly, a titanium tetrahalide is preferred.

As the electron donor there may be used an organic compound containing oxygen, nitrogen, phosphorus or sulfur.

As concrete examples of the electron donor reference may be made to amines, amides, ketones, nitriles, phosphines, phosphoramides, esters, ethers, thioethers, thioesters, acid anhydrides, acid halides, acid amides, aldehydes and organic acids.

Among these examples the esters, ethers, ketones and acid anhydrides are preferred. For example, reference may be made to ethyl benzoate, p-methoxyethyl benzoate, p-ethoxyethyl benzoate, methyl toluylate,diisobutyl phthalate, benzoquinone, benzoic anhydride, ethyleneglycol butyl ether and the like.

The thus prepared solid catalytic component (A) is desired to have a halogen/titanium molar ratio of 3 to 200, preferably 4 to 100 and a magnesium/titanium molar ratio of 1 to 90, preferably 5 to 70.

The organoaluminum compound (B) above is not especially limited, but trialkyl aluminum is particularly preferred.

As the electron-donating compound (C) there is used heterocyclic compounds represented by the formula of

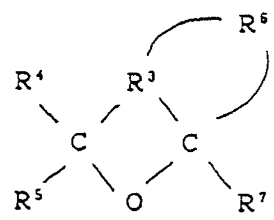

wherein $R^3$ and $R^6$ each is a hydrocarbyl group, preferably a non-substituted saturated or unsaturated hydrocarbyl group having 2 to 5 carbon atoms, and $R^4$, $R^5$ and $R^7$ each is hydrogen atom or a hydrocarbyl group, preferably hydrogen atom or a non-substituted saturated or unsaturated hydrocarbyl group having 1 to 5 carbon atoms.

As the heterocyclic compound reference may be made to, for example, 1,4-cineol, 1,8-cineol, m-cineol, pinol, benzofuran, 2,3-dihydrobenzofuran (coumarane), 2H-chromene, 4H-chromene, chromane, isochromane, dibenzofuran, xanthene and etc. These various heterocyclic compounds may be used singly or in combination of two or more thereof.

Among these heterocyclic compounds 1,8-cineol is particularly preferred.

The composition of the catalyst used in preparing the butene-1 copolymer of the present invention is such that the content of the organoaluminum compound (B) is normally in the range of 0.1 to 1,000 times, preferably 1 to 500 times in moles that of titanium atom of the tetravalent titanium compound in the solid catalytic component (A). Further, the electron donating compound (C) is normally used in an amount of 0.1 to 500 times, preferably 0.5 to 200 times in moles that of titanium atom of the tetravalent titanium compound in the solid catalytic component.

A gaseous phase polymerization temperature is normally 45 to 80 °C, preferably 50 to 70 °C.

A polymerization pressure may optionally be chosen so that no substantial liquefaction occurs and it is normally in the range of 1 to 15 bar (kgs/cm$^2$).

Furthermore, the proportion (mole percentages) of the amounts of ethylene, the other $\alpha$-olefine and butene-1 introduced into reaction may be optionally chosen within the above-mentioned molar fractions of the respective olefin units of the butene-1 copolymer to be prepared.

For the purpose of adjusting the molecular weight of the butene-1 copolymer, a molecular weight-adjusting agent such as hydrigen may be used together. Further, for the purpose of preventing the aggregation of the copolymer, an inert gas such as nitrogen, methane, ethane or propane which has a lower boiling point than that of the butene-1 is used in combination.

The thus obtained butene-1 copolymer of the present invention can be used as materials suitable for films, electric wire sheath or various pipes.

In accordance with the present invention, there can be prepared a butene-1 copolymer having a moderate hardness and flexibility, a high elasticity, further a small change of shrinkage after shaping due to rapid transformation from the type-II to type-I crystals and excellent low-temperature impact properties, i.e., maintained at a high impact strength at a low temperature.

Furthermore, the butene-1 copolymer of the present invention has better working properties than prior art butene-1 copolymers due to a broad width of molecular weight distribution. That is, a shaping pressure is within a good range. Further, the appearance of a shaped article is very good, and particularly a film-shaped article has a good transparency.

Heat-sealing with the film-shaped article is carried out at a proper temperature, and the heat-sealing properties are good.

The butene-1 copolymer of the present invention has good mechanical properties, particularly a high elasticity, high tensile break strength and high impact strength.

## EXAMPLES

The present invention will be illustated below with reference to some examples and comparative examples.

The properties of the butene-1 copolymers prepared in the examples and comparative examples were measured in the following manner.

### Intrinsic Viscosity [$\eta$]

It was measured in decalin at 135 °C.

Density

It was measured in accordance with a density gradient tube method under JIS-K-7112.

Molecular Weight Distribution (Mw/Mn)

It was measured at 135 °C by a GPC apparatus 150C made by Waters Co. equipped with two columns with each of Showdex AD807 and AD80M/S.

Differential Scanning Calorymetry

The obtained butene-1 copolymers were dried and used as samples. Endothermic peaks of these samples were measured while being heated at a heating rate of 10 °C/min to a temperature of 0 to 200 °C.

Content of Soluble Matter in Boiling Diethyl Ether

The obtained butene-1 copolymers were dried, then pressed to form sheets of 1 mm thick and cut in 1 mm squares, which were used as a sample. The content of soluble matter was measured by Soxhlet extraction in diethyl ether for 6 hours.

Crystallinity

The crystallinity of pressed sheets of 1 mm thick was measured by X-ray diffractometry in 48 hours after pressing.

Number of Neighboring Bonds of Ethylene Unit and the other α-olefin Unit in Copolymer (per 1,000 carbon atoms)

Measurement was made by a $^{13}C$-NMR apparatus of 400
The numerals (n/1,000c) in Table 1 denote the number of bonds between the ethylene units and the other α-olefin units per 1,000 carbon atoms.

Period of Time for Transformation from Type-II Crystal to Type-I Crystal

Reflection on (110) plane of type-I crystal and reflection on (200) plane of type-II crystal were measured for respective integrated intensities ( I(110) and II(200)). The period of time was one (hour) required until I-(110)/(I(110) + II(200)] became 0.5.

Change of Shrinkage

The shrinkages of injection molded samples were measured in 1 hour ($a_1$) and 11 days ($a_2$) after molding. The change of shrinkage was an $a_1/a_2$ ratio. Data in the MD direction of the molded samples were adopted.

Stickiness of Surface

Molded samples were touched on the surface thereof with a finger in 10 days after molding. It was observed with eyes whether a fingerprint was left.

Tensile Break Strength

It was measured in accordance with JIS-K-7113.

Izod Impact Strength

It was measured in accordance with JIS-K-7110.

EXAMPLE 1

I. Preparation of Solid Catalytic Component (A)

300 ml of a 20 % butyloctyl magnesium solution in heptane was charged into a five-necked flask equipped with a mechanical stirrer, reflux cooler, dropping funnel, gas feed valve and thermometer. Nitrogen was introduced into the flask, which was maintained therein at an inert atmosphere. To the solution was added 5 liters of butyl chloride with the dropping funnel at room temperature. Thereafter, chlorine gas was added at a rate of 5 ml/min for chlorination.

Subsequently, 2.5 liters of silicone oil was added at 25 to 35 °C. To the resultant mixture was dropped 113 ml of ethanol. The addition of the ethanol caused the chlorinated product to precipitate. The precipitate-containing mixed solution was stirred at 40 °C for 1 hour, then heated to 75 to 80 °C, and left to stand overnight at this temperature.

This high-temperature solution was gently added by syphon to a solution containing diisobutyl phthalate as electron donor and an excess of $TiCl_4$ and cooled to -25 °C. Thus, in this low-temperature $TiCl_4$, a reaction intermediate product was allowed to precipitate. The resultant mixed solution containing the precipitate was heated to room temperature.

Then, further addition of diisobutyl phthalate as electron donor to the mixed solution containing the precipitate was made, and this mixed solution was heated to a temperature of 100 to 110 °C and maintained at this temperature for 1 hour. The reaction product was allowed to settle and washed five to six times with heptane, and the liquid was transferred by syphon to another vessel.

To this liquid was added an excess of $TiCl_4$, and the resultant mixture was stirred at 110 °C for 1 hour. The resultant precipitate and the liquid were separated by syphon from each other. The resultant precipitate (a catalytic component) was washed several times with heptane (five to six times at 80 °C).

The resultant precipitate was collected and dried under slightly reduced pressure. Thus, the solid catalytic component (A) containing a Ti content of 3.0 % by weight was obtained.

II. Preparation of Catalyst

The solid catalytic component (A) obtained in Paragraph I above was charged in such an amount that the titanium content was 2 mmol/l, into a catalyst-preparation vessel. Into this catalyst-preparation vessel was charged 30 mmol/l of triisobutyl alumimnum and 12 mmol/l of 1,8-cineol. Thereafter, propylene was charged in an amount of 50 grs per mmol of titanium atom. The catalyst-preparation vessel was heated to 40 °C and the reaction was conducted.

III. Preparation of Butene-1 Copolymer

A fluidized bed polymerizer of 300 mm in diameter and 100 liters in capacity was used. A Ti catalyst slurry which was prepared from the catalyst obtained in Paragraph II above such that the Ti content was 3.6 mmol/l in terms of Ti atom, was fed at a flow rate of 0.15 l/hr from the catalyst-preparation vessel to the polymerizer. Further, triisobutyl aluminum and 1,8-cineol were fed to the polymerizer in flow rates of 30 mmol/hr and 24 mmol/hr, respectively.

The partial pressures of butene-1 and nitrogen gas were adjusted to 3 $kgs/cm^2$ and 4 $kgs/cm^2$, respectively, and the partial pressure of hydrogen gas adjusted to such a pressure that the intrinsic viscosity of the resultant copolymer was as shown in Table 1. Further, the butene-1, ethylene, propylene, nitrogen gas and hydrogen gas were fed at a gas space velocity of 35 cm/sec. The reaction was conducted at 60 °C.

EXAMPLES 2 - 4 AND COMPARATIVE EXAMPLES 1 - 3

A butene-1 copolymer was prepared in the same manner as in EXAMPLE 1, except that the butene-1, propylene and ethylene were fed at flow rates different from those of EXAMPLE 1.

EXAMPLE 5

I. Preparation of Solid Catalyst Component

To a heat dried glass-made three-necked flask of 500 ml in capacity equipped with a thermometer and

stirrer were charged 75 ml of dried heptane, 75 ml of titanium tetrabutoxide and 10 grs of anhydrous magnesium chloride. These were completely solved. The resultant solution was cooled to 40 °C. Then, 15 ml of methylhydrogen polysiloxane was added to this solution to allow a magnesium chloride-titanium tetrabutoxide complex to precipitate. The complex was washed with purified heptane. To this were added 8.7 ml of silicon tetrachloride and 1.8 ml of diheptyl phthalate, which was held at 50 °C for 2 hours. The resultant product was washed with purified heptane to obtain the solid catalytic component.

The titanium content and diheptyl phthalate content of the obtained solid catalytic component were 3.0 % by weight and 25.0 % by weight, respectively.

II. Preparation of Butene-1 Copolymer

To a 20 liter polymerizer were continuously charged 5 kgs/hr of butene-1, and ethylene and propylene at such rates to reach the respective amounts as shown in Table 1, 10 mmol/hr of triethyl aluminum, 1 mmol/hr of vinyl triethoxysilane and 0.05 mmol/hr of the solid catalytic component obtained in Paragraph I above in terms of titanium atom. The partial pressures of the butene-1, ethylene, propylene and hydrogen all in a gaseous phase were adjusted so that the compositional proportion and intrinsic viscosity of the copolymer to be obtained were as shown in Table 1. The reaction temperature was kept at 70 °C.

The polymerized liquid was continuously removed out from the polymerizer, so that the liquid quantity in the polymerizer was kept at 10 liters. To the removed reaction product was added a small amount of ethanol to stop the polymerization, and then unreacted monomers were eliminated to obtain the butene-1 copolymer.

COMPARATIVE EXAMPLES 4 AND 5

A butene-1 copolymer was prepared in the same manner as in EXAMPLE 5, except that the partial pressures of butene-1, ethylene and propylene were changed.

Table 1

| | Comonomer-1 | | Comonomer-2 | | [η] |
|---|---|---|---|---|---|
| | Species of Monomer | Content (mol%) | Species of Monomer | Content (mol%) | (dl/g) |
| EXAMPLE 1 | $C''_2$ | 8.3 | $C''_3$ | 5.5 | 2.3 |
| EXAMPLE 2 | $C''_2$ | 12.4 | $C''_3$ | 2.3 | 2.2 |
| EXAMPLE 3 | $C''_2$ | 8.6 | $C''_3$ | 7.4 | 2.4 |
| EXAMPLE 4 | $C''_2$ | 8.5 | $C''_3$ | 5.3 | 4.6 |
| EXAMPLE 5 | $C''_2$ | 8.6 | $C''_3$ | 5.4 | 2.3 |
| COMP.EX.1 | $C''_2$ | 8.6 | $C''_3$ | 0 | 2.1 |
| COMP.EX.2 | $C''_2$ | 0 | $C''_3$ | 7.1 | 2.1 |
| COMP.EX.3 | $C''_2$ | 23.5 | $C''_3$ | 5.2 | 2.4 |
| COMP.EX.4 | $C''_2$ | 4.3 | $C''_3$ | 31.5 | 2.2 |
| COMP.EX.5 | $C''_2$ | 24.2 | $C''_3$ | 28.6 | 2.1 |

Table 1 (Cont'd)

| Density ($gr/cm^3$) | Mw/Mn | Max. Melting Point (°C) | Cont.of Sol.Matter in Boiling Diethyl Ether (wt %) | Crystal-linity (%) |
|---|---|---|---|---|
| 0.87 | 5.7 | 76 | 26.2 | 25.4 |
| 0.86 | 5.6 | 70 | 35.3 | 19.5 |
| 0.86 | 5.6 | 71 | 28.3 | 23.2 |
| 0.87 | 6.2 | 75 | 27.6 | 25.2 |
| 0.87 | 3.2 | 79 | 28.1 | 26.3 |
| 0.89 | 5.6 | 81 | 23.5 | 29.4 |
| 0.90 | 5.8 | 95 | 5.2 | 47.6 |
| 0.84 | 5.6 | 68 | 42 | ~~3.2~~ 13.2 |
| 0.85 | 3.1 | 72 | 47 | 26.1 |
| 0.83 | 3.3 | 62 | 65 | 7.5 |

Table 1 (Cont'd)

| Number of Neighboring Bonds of Comonomers 1 and 2 (n/1,000c) | Period of Transform. from type-I to -II Crystals (hrs) | Change of Shrinkage (%) |
|---|---|---|
| not more than 0.1 | not more than 0.1 | 5.7 |
| not more than 0.1 | 0.15 | 7.5 |
| not more than 0.1 | not more than 0.1 | 4.6 |
| not more than 0.1 | not more than 0.1 | 6.0 |
| not more than 0.1 | not more than 0.1 | 5.9 |
| 0 | 5 | 48.5 |
| 0 | not more than 0.1 | 5.6 |
| not more than 0.1 | not more than 0.1 | 4.3 |
| not more than 0.1 | not more than 0.1 | 3.5 |
| 1.5 | not more than 0.1 | 3.3 |

Table 1 (Cont'd)

| Izod Impact Strength (kgs-cm/cm) | | Tensile Break Strength ($kgs/cm^2$) | Surface Stickiness |
|---|---|---|---|
| 23 °C | -10 °C | | |
| not broken | 10 | 340 | not sticky |
| not broken | 21 | 280 | not sticky |
| not broken | 10 | 320 | not sticky |
| not broken | 19 | 400 | not sticky |
| not broken | 10 | 340 | not sticky |
| not broken | 11 | 310 | not sticky |
| not broken | 2 | 360 | not sticky |
| not broken | 24 | 110 | sticky |
| not broken | 6 | 150 | sticky |
| not broken | 20 | 45 | very sticky |

Notes: $C''_2$ and $C''_3$ denote ethylene and propylene, respectively.

EXAMPLE 6

A butene-1 copolymer was prepared in the same manner as in EXAMPLE 1, except that hexene-1 was used in place of propylene.

The results are shown in Table 2.

EXAMPLES 7 - 11 AND COMPARATIVE EXAMPLES 6 AND 7

Butene-1 copolymers were prepared in the same manner as in EXAMPLE 1, except that butene-1 and the comonomers shown in Table 2 were fed at the feeding rates indicated in Table 2.

COMPARATIVE EXAMPLES 8 -10

To a 20 liter polymerizer were continuously charged 5 kgs/hr of butene-1, such an amount of propylene as the propylene unit amount as shown in Table 1, 10 mmol/hr of triethyl aluminum, 1 mmol/hr of vinyltriethoxysilane and 0.05 mmol/hr of the solid catalytic component in terms of titanium atom. The polymerization conditions were the same as in EXAMPLE 5, except that the partial pressures of the butene-1, ethylene, hexene-1 and hydrogen gas were adjusted, so that the compositional proportions and intrinsic viscosity of the butene-1 copolymer were as shown in Table 2.

The results are shown in Table 2.

Table 2

| | Comonomer-1 | | Comonomer-2 | | [η] |
|---|---|---|---|---|---|
| | Species of Monomer | Content (mol%) | Species of Monomer | Content (mol%) | (dl/g) |
| EXAMPLE 6 | C"$_6$-1 | 5.2 | C"$_2$ | 3.4 | 2.6 |
| EXAMPLE 7 | C"$_6$-1 | 7.6 | C"$_2$ | 2.8 | 2.4 |
| EXAMPLE 8 | C"$_6$-1 | 12.4 | C"$_2$ | 1.2 | 2.4 |
| EXAMPLE 9 | 4-Me-1 | 7.2 | C"$_2$ | 3.1 | 2.7 |
| EXAMPLE 10 | C"$_8$-1 | 6.6 | C"$_2$ | 3.3 | 2.6 |
| EXAMPLE 11 | C"$_6$-1 | 5.2 | C"$_2$ | 8.6 | 2.3 |
| COMP.EX. 6 | C"$_6$-1 | 7.2 | - | - | 2.1 |
| COMP.EX. 7 | - | - | C"$_2$ | 8.6 | 2.1 |
| COMP.EX. 8 | C"$_6$-1 | 25.4 | C"$_2$ | 2.6 | 2.5 |
| COMP.EX. 9 | C"$_6$-1 | 4.2 | C"$_2$ | 21.2 | 2.5 |
| COMP.EX.10 | C"$_6$-1 | 26.7 | C"$_2$ | 28.4 | 2.4 |

Table 2 (Cont'd)

| Density ($gr/cm^3$) | Mw/Mn | Max. Melting Point (°C) |
|---|---|---|
| 0.861 | 5.5 | 83 |
| 0.858 | 5.3 | 85 |
| 0.851 | 5.2 | 84 |
| 0.857 | 5.4 | 83 |
| 0.860 | 5.5 | 84 |
| 0.854 | 5.3 | 74 |
| 0.871 | 5.4 | 106 |
| 0.884 | 5.6 | 81 |
| 0.843 | 3.2 | 70 |
| 0.845 | 3.1 | 63 |
| 0.834 | 3.0 | 55 |

Table 2 (Cont'd)

| Number of Neighboring Bonds of Comonomers 1 and 2 (n/1,000c) | Period of Transform. from type-I to -II Crystals (hrs) | Change of Shrinkage (%) |
|---|---|---|
| not more than 0.1 | not less than 500 | 1.2 |
| not more than 0.1 | not less than 500 | 1.1 |
| not more than 0.1 | not less than 500 | 1.0 |
| not more than 0.1 | not less than 500 | 1.1 |
| not more than 0.1 | not less than 500 | 1.1 |
| not more than 0.1 | not less than 500 | 1.2 |
| 0 | not less than 500 | 1.1 |
| 0 | 5 | 6 |
| not more than 0.1 | not less than 500 | 1.0 |
| not more than 0.1 | not less than 500 | 1.5 |
| 1.3 | not less than 500 | 1.0 |

Table 2 (Cont'd)

| Izod Impact Strength (kgs-cm/cm) | | Tensile Break Strength ($kgs/cm^2$) | Surface Stickiness |
|---|---|---|---|
| 23 °C | -10 °C | | |
| not broken | 16 | 350 | not sticky |
| not broken | 16 | 320 | not sticky |
| not broken | 14 | 310 | not sticky |
| not broken | 13 | 360 | not sticky |
| not broken | 17 | 330 | not sticky |
| not broken | 20 | 310 | not sticky |
| not broken | 3 | 320 | not sticky |
| not broken | 11 | 310 | not sticky |
| not broken | 14 | 170 | sticky |
| not broken | 25 | 105 | sticky |
| not broken | 34 | 35 | very sticky |

Notes: $C''_6$-1, 4-Me-1 and $C''_8$-1 denote hexene-1, 4-methylpentene-1 and octene-1, respectively.

## Claims

1. A butene-1 copolymer comprising:
   60 to 98.5 mol% of a butene-1 unit,
   0.5 to 20 mol% of an ethylene unit, and
   0.5 to 20 mol% of an α-olefin unit (S) other than the above units; and
   having an intrinsic viscosity of 0.9 to 7.2 dl/g when measured in a decaline solution at 135° C,
   a density of 0.840 to 0.920 $g/cm^3$,
   a ratio of a weight-average molecular weight to a number-average molecular weight of 2 to 15,
   a maximum melting point of 50° C to 120° C when measured by a differential scanning calorimeter,
   a content of materials in said copolymer soluble in boiling diethyl ether of 3 to 50% by weight,
   a crystallinity of 5 to 60% by weight when measured by X-ray diffractometry, and
   a number of neighbouring bonds connecting said ethylene unit to said α-olefin unit of 1 or less per 1,000 carbon atoms when measured by NMR.

2. The butene-1 copolymer as claimed in claim 1, **characterized in that** said α-olefin unit is a propylene unit.

3. The butene-1 copolymer as claimed in claim 2, **characterized in that** said copolymer comprises:
   73 to 96.8 mol% of a butene-1 unit,
   2 to 20 mol% of an ethylene unit, and
   0.7 to 12 mol% of the propylene unit; and
   has an intrinsic viscosity of 1.0 to 5.0 dl/g when measured in a decaline solution at 135° C,
   a density of 0.86 to 0.91 $g/cm^3$,

a ratio of a weight-average molecular weight to a number-average molecular weight of 3 to 12, a maximum melting point of $60^\circ$ C to $110^\circ$ C when measured by a differential scanning calorimeter, a content of materials in said copolymer soluble in boiling diethyl ether of 5 to 40% by weight, a crystallinity of 10 to 50% by weight when measured by X-ray diffractometry, and a number of neighbouring bonds connecting said ethylene unit to said propylene unit of 0.7 or less per 1,000 carbon atoms when measured by NMR.

4. The butene-1 copolymer as claimed in claim 1, **characterized in that** the $\alpha$-olefin unit comprises 5 or more carbon atoms.

5. The butene-1 copolymer as claimed in clam 4, **characterized in that** said $\alpha$-olefin unit is hexene-1, octene-1 or 4-methylpentene-1.

6. The butene-1 copolymer as claimed in claim 4, **characterized in that** said copolymer comprises: 70 to 97.3 mol% of the butene-1 unit, 0.7 to 15 mol% of the ethylene unit, and 2 to 15 mol% of the $\alpha$-olefin unit having 5 or more carbon atoms; and has an intrinsic viscosity of 1.0 to 5.0 dl/g when measured in a decaline solution at $135^\circ$ C, a density of 0.85 to 0.91 g/cm$^3$, a ratio of a weight-average molecular weight to a number-average molecular weight of 2 to 12, a maximum melting point of $70^\circ$ C to $110^\circ$ C when measured by a differential scanning calorimeter, a content of materials in said copolymer soluble in boiling diethyl ether of 5 to 40% by weight, and a number of neighbouring bonds connecting said ethylene unit to said $\alpha$-olefin unit of 0.7 or less per 1,000 carbon atoms when measured by $^{13}$C-NMR.

7. The butene-1 copolymer as claimed in claim 1, **characterized in that** said copolymer is obtainable by polymerizing butene-1 with ethylene and an $\alpha$-olefin other than ethylene and butene-1 in a gaseous phase in the presence of a catalyst comprising a solid catalytic component, a trialkyl aluminum and a heterocyclic compound as an electron-donating compound; said solid catalytic component prepared by contacting a halide of a tetravalent titanium at a temperature ranging from $-25^\circ$ C to $180^\circ$ C in the presence of an electron donor with a carrier prepared by chlorinating an organomagnesium compound represented by the following general formula:

$MgR^1R^2$

wherein $R^1$ and $R^2$ are identical to or different form each other and each is an alkyl group having from 1 to 20 carbon atoms, with a chlorinating agent and said heterocyclic compound represented by following general formula:

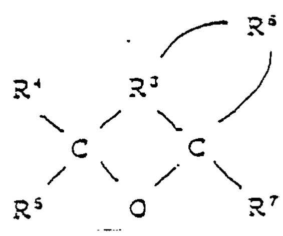

wherein $R^3$ and $R^6$ each is a non-substituted or substituted, saturated or unsaturated hydrocarbyl group having from 2 to 5 carbon atoms, and $R^4$,and $R^5$ and $R^7$ each is a hydrogen atom or a non-substituted or substituted,, saturated or unsaturated hydrocarbyl group having from 1 to 5 carbon atoms.

8. The butene-1 copolymer as claimed in claim 7, **characterized in that** said organomagnesium compound is butyloctyl magnesium, said chlorinating agent is chlorine gas or butyl chloride, said electron donor is diisobutyl phthalate, said halide of tetravalent titanium is titanium tetrachloride, said trialkyl aluminium is triisobutyl aluminum, and said electron-donating compound is 1,8-cineole.

**Revendications**

1. Copolymère de butène-1, comprenant :
   60 à 98,5 moles % de motifs de butène-1,
   0,5 à 20 moles % de motifs d'éthylène, et
   0,5 à 20 moles % de motifs d'une ou plusieurs α-oléfines, autres que les motifs ci-dessus ;
   et ayant
   une viscosité intrinsèque de 0,9 à 7,2 dl/g, telle que mesurée en solution dans la Décaline à 135°C,
   une masse volumique de 0,840 à 0,920 g/cm$^3$,
   un rapport du poids moléculaire moyen en poids au poids moléculaire moyen en nombre de 2 à 15,
   un point de fusion maximal de 50 à 120°C, tel que mesuré par un calorimètre différentiel à balayage,
   une teneur dudit copolymère de butène-1 en matière soluble dans l'éther de diéthyle bouillant de 3 à 50 % en poids,
   une cristallinité de 5 à 60 %, telle que mesurée par diffractométrie aux rayons X, et
   un nombre de liaisons de jonction entre lesdits motifs d'éthylène et lesdits motifs de α-oléfine(s) de 1 ou moins pour 1000 atomes de carbone, tel que mesuré par RMN.

2. Copolymère de butène-1 selon la revendication 1, caractérisé en ce que lesdits motifs de α-oléfine(s) sont des motifs de propylène.

3. Copolymère de butène-1 selon la revendication 2, caractérisé en ce que ledit copolymère comprend :
   73 à 96,8 moles % de motifs de butène-1,
   2 à 20 moles % de motifs d'éthylène, et
   0,7 à 12 moles % des motifs de propylène ;
   et présente
   une viscosité intrinsèque de 1,0 à 5,0 dl/g, telle que mesurée en solution dans la Décaline à 135°C,
   une masse volumique de 0,86 à 0,91 g/cm$^3$,
   un rapport du poids moléculaire moyen en poids au poids moléculaire moyen en nombre de 3 à 12,
   un point de fusion maximal de 60°C à 110°C, tel que mesuré par un calorimètre différentiel à balayage,
   une teneur dudit copolymère en matière soluble dans l'éther de diéthyle bouillant de 5 à 40 % en poids,
   une cristallinité de 10 à 50 % en poids, telle que mesurée par diffractométrie aux rayons X, et
   un nombre de liaisons de jonction entre lesdits motifs d'éthylène et lesdits motifs de propylène de 0,7 ou moins pour 1000 atomes de carbone, tel que mesuré par RMN.

4. Copolymère de butène-1 selon la revendication 1, caractérisé en ce que les motifs de α-oléfine comprennent 5 ou plus de 5 atomes de carbone.

5. Copolymère de butène-1 selon la revendication 4, caractérisé en ce que lesdits motifs de α-oléfine sont ceux d'hexène-1, d'octène-1 ou de 4-méthylpentène-1.

6. Copolymère de butène-1 selon la revendication 4, caractérisé en ce qu'il comprend :
   70 à 97,3 moles % de motifs de butène-1,
   0,7 à 15 moles % de motifs d'éthylène, et
   2 à 15 moles % de motifs de α-oléfine ayant 5 ou plus de 5 atomes de carbone ;
   et présente
   une viscosité intrinsèque de 1,0 à 5,0 dl/g, telle que mesurée en solution dans la Décaline à 135°C,
   une masse volumique de 0,85 à 0,91 g/cm$^3$,
   un rapport du poids moléculaire moyen en poids au poids moléculaire moyen en nombre de 2 à 12,
   un point de fusion maximal de 70°C à 110°C, tel que mesuré par un calorimètre différentiel à balayage,

une teneur dudit copolymère en matière soluble dans l'éther de diéthyle bouillant de 5 à 40 % en poids, et

un nombre de liaisons de jonction entre lesdits motifs d'éthylène et lesdits motifs de α-oléfine de 0,7 ou moins pour 1000 atomes de carbone, tel que mesuré par RMN de $^{13}C$.

**7.** Copolymère de butène-1 selon la revendication 1, caractérisé en ce que ledit copolymère peut être obtenu en polymérisant en phase gazeuse du butène-1 avec de l'éthylène et une α-oléfine autre que l'éthylène et le butène-1, en présence d'un catalyseur comprenant un composant catalytique solide, un trialkylaluminium et un composé hétérocyclique comme composé donneur d'électrons ; ledit composant catalytique solide étant préparé par mise en contact d'un halogénure de titane tétravalent, à une température de -25 °C à 180 °C, en présence d'un donneur électrons, avec un support préparé en chlorurant un organomagnésien représenté par la formule générale suivante :

$MgR^1R^2$

où $R^1$ et $R^2$ sont identiques ou différents et représentent chacun un groupe alkyle ayant 1 à 20 atomes de carbone, avec un agent de chloruration et ledit composé hétérocyclique étant représenté par la formule générale suivante :

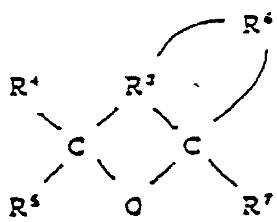

où $R^3$ et $R^6$ représentent chacun un groupe hydrocarbyle non substitué ou substitué, saturé ou insaturé, ayant 2 à 5 atomes de carbone, et $R^4$, $R^5$ et $R^7$ représentent chacun un atome d'hydrogène ou un groupe hydrocarbyle non substitué ou substitué, saturé ou insaturé, ayant 1 à 5 atomes de carbone.

**8.** Copolymère de butène-1 selon la revendication 7, caractérisé en ce que ledit organomagnésien est le butyloctylmagnésium, ledit agent de chloruration est le chlore gazeux ou le chlorure de butyle, ledit donneur d'électrons est le phtalate de diisobutyle, ledit halogénure de titane tétravalent est le tétrachlorure de titane, ledit trialkylaluminium est le triisobutylaluminium, et ledit composé donneur d'électrons est le 1,8-cinéole.

## Patentansprüche

**1.** Buten-1-Copolymer, enthaltend:
60 bis 98,5 Mol-% Buten-1-Einheiten,
0,5 bis 20 Mol-% Ethyleneinheiten und
0,5 bis 20 Mol-% von den oben angegebenen Einheiten verschiedene α-Olefineinheiten (S); und mit
einer Grenzviskositätszahl von 0,9 bis 7,2 dl/g, gemessen mit einer Dekalinlösung bei 135 °C,
einer Dichte von 0,840 bis 0,920 $g/cm^3$,
einem Verhältnis von gewichtsmittlerem Molekulargewicht zu zahlenmittlerem Molekulargewicht von 2 bis 15,
zu einem maximalen Schmelzpunkt von 50 bis 120 °C, gemessen in einem Differentialabtast-Kalorimeter,
einem Gehalt von in siedendem Diethylether löslichen Materialien von 3 bis 50 Gew.-%,
einer Kristallinität von 5 bis 60 Gew.-%, gemessen durch Röntgendiffraktometrie, und
einer Anzahl von benachbarten Bindungen, welche die Ethyleneinheiten an die α-Olefineinheiten binden, von 1 oder weniger pro 1000 Kohlenstoffatome, gemessen durch NMR.

**2.** Buten-1-Copolymer nach Anspruch 1, **dadurch gekennzeichnet,** daß die α-Olefineinheiten Propyleneinheiten sind.

3. Buten-1-Copolymer nach Anspruch 2, **dadurch gekennzeichnet,** daß es
73 bis 96,8 Mol-% Buten-1-Einheiten,
2 bis 20 Mol-% Ethyleneinheiten und
0,7 bis 12 Mol-% Propyleneinheiten enthält; und
eine Grenzviskositätszahl von 1,0 bis 5,0 dl/g, gemessen in einer Dekalinlösung bei 135 °C,
eine Dichte von 0,86 bis 0,91 $g/cm^3$,
ein Verhältnis von gewichtsmittlerem Molekulargewicht zu zahlenmittlerem Molekulargewicht von 3 bis 12,
einen maximalen Schmelzpunkt von 60 °C bis 110 °C, gemessen in einem Differential-Abtastkalorimeter,
einen Gehalt von in siedendem Diethylether löslichen Materialien von 5 bis 40 Gew.-%,
eine Kristallinität von 10 bis 50 Gew.-%, gemessen durch Röntgenbeugungs-Diffraktometrie und
eine Anzahl von benachbarten Bindungen, welche die Ethyleneinheiten an die Propyleneinheiten binden, von 0,7 oder weniger pro 1000 Kohlenstoffatome, gemessen durch NMR, aufweist.

4. Buten-1-Copolymer nach Anspruch 1, **dadurch gekennzeichnet,** daß die α-Olefineinheiten 5 oder mehr Kohlenstoffatome aufweisen.

5. Buten-1-Copolymer nach Anspruch 4, **dadurch gekennzeichnet,** daß die α-Olefineinheiten Hexen-1-, Octen-1- oder 4-Methylpenten-1-Einheiten sind.

6. Buten-1-Copolymer nach Anspruch 4, **dadurch gekennzeichnet,** daß es
70 bis 97,3 Mol-% Buten-1-Einheiten,
0,7 bis 15 Mol-% Ethyleneinheiten und
2 bis 15 Mol-% der α-Olefineinheiten mit 5 oder mehr Kohlenstoffatomen enthält; und
eine Grenzviskositätszahl von 1,0 bis 5,0 dl/g, gemessen in einer Dekalinlösung bei 135 °C,
eine Dichte von 0,85 bis 0,91 $g/cm^3$,
ein Verhältnis von gewichtsmittlerem Molekulargewicht zu zahlenmittlerem Molekulargewicht von 2 bis 12,
einen maximalen Schmelzpunkt von 70 °C bis 110 °C, gemessen in einem Differential-Abtastkalorimeter,
einen Gehalt von in siedendem Diethylether löslichen Materialien von 5 bis 40 Gew.-%, und
eine Anzahl von benachbarten Bindungen, welche die Ethyleneinheiten an die α-Olefineinheiten binden, von 0,7 oder weniger pro 1000 Kohlenstoffatome, gemessen durch $^{13}C$-NMR, aufweist.

7. Buten-1-Copolymer nach Anspruch 1, **dadurch gekennzeichnet,** daß das Copolymer erhältlich ist durch Polymerisieren von Buten-1 mit Ethylen und einem von Ethylen und Buten-1 verschiedenen α-Olefin in der Gasphase in Gegenwart eines Katalysators, der eine feste katalytische Komponente, eine Trialkylaluminium und eine heterocyclische Verbindung als Elektronendonatorverbindungenthält, wobei die feste katalytische Komponente hergestellt ist durch Inkontaktbringen eines Halogenids von vierwertigem Titan bei einer Temperatur von -25 °C bis 180 °C in Gegenwart eines Elektronendonors mit einem Träger, der durch Chlorieren einer magnesiumorganischen Verbindung der folgenden allgemeinen Formel

$MgR^1R^2$

worin $R^1$ und $R^2$, die gleichartig oder verschieden sein können, Jeweils Alkylgruppen mit 1 bis 20 Kohlenstoffatomen bedeuten, mit einem Chlorierungsmittel hergestellt worden ist, und die heterocyclische Verbindung der folgenden allgemeinen Formel

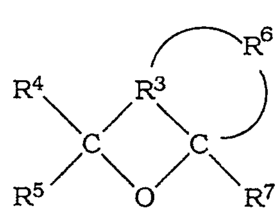

entspricht, worin $R^3$ und $R^6$ jeweils eine nichtsubstituierte oder substituierte, gesättigte oder ungesättigte Kohlenwasserstoffgruppen mit 2 bis 5 Kohlenstoffatomen und $R^4$, $R^5$ und $R^7$ jeweils Wasserstoffatome oder eine nichtsubstituierte oder substituierte, gesättigte oder ungesättigte Kohlenwasserstoffgruppe mit 1 bis 5 Kohlenstoffatomen bedeuten, gebildet worden ist.

**8.** Buten-1-Copolymer nach Anspruch 7, **dadurch gekennzeichnet,** daß die magnesiumorganishe Verbindung Butyloctylmagnesium, das Chlorierungsmittel gasförmiges Chlor oder Butylchlorid, der Elektronendonor Diisobutylphthalat, das Halogenid des vierwertigen Titans Titantetrachlorid, das Trialkylaluminium Triisobutylaluminium und die Elektronendonatorverbindung 1,8-Cineol sind.